# EUROPEAN PATENT APPLICATION

(11) **EP 2 752 283 A1**
(43) Date of publication of application: **09.07.2014**
(21) Application number: 12827068.3
(22) Date of filing: 31.07.2012
(51) Int. Cl.: B29C 33/40, B29C 59/04, H01L 21/027

(54) **RESIN MOLD BONDING METHOD AND ROLL-TO-ROLL CONTINUOUS MOLD COMPOSITION USING SAME**

(30) Priority: 30.08.2011 JP 2011187099
(71) Applicant: Soken Chemical & Engineering Co., Ltd., Toshima-ku Tokyo 171-8531 (JP)
(72) Inventor: YAMADA, Hiroko, Sayama-shi Saitama 350-1320 (JP); TAKAHASHI, Takanori, Sayama-shi Saitama 350-1320 (JP); SUTO, Yasuo, Sayama-shi Saitama 350-1320 (JP)
(74) Representative: Matthews, Derek Peter
(86) International application number: PCT/JP2012/069478
(87) International publication number: WO 2013/031460

(57) **Abstract**

[Technical Problem]

It is an object to provide a bonding method of a resin mold and a roll-to-roll continuous mold composition that is produced by using the bonding method, which are used to manufacture resin structures (in particular, resin-based replica molds) in quantity on a roll-to-roll basis, and with which the strength of a joint part may be increased to a satisfactory extent in the case in which an end part of a resin mold is bonded to each other, almost no step is formed at the joint part, and a transcription of a reversal pattern of a fine concave convex pattern that is desired is carried out in a successful manner.

[Solution of Problem]

A bonding method of a resin mold is characterized by comprising the step of butting the end parts of resin molds that is provided with a formed reversal pattern of a fine concave convex pattern that is desired to each other for bonding the resin molds, wherein a detachable resin is filled in a gap of the butted part between the end parts of the resin mold and the end parts of the resin molds are bonded to each other in an integrated manner by the hardening of the detachable resin.

## Description

### [Technical Field]

The present invention relates to a bonding method of a resin mold and a roll-to-roll continuous mold composition that is produced by using the bonding method. More specifically, the present invention relates to a resin mold and a roll-to-roll continuous mold composition that is produced by using the bonding method that is suitable for producing a quantity of resin structures (in particular, resin-based replica molds) in a continuous manner from one mold that is an original version.

### [Background Art]

The imprint technology is the fine processing technology in which a mold that is provided with a reversal pattern of a fine concave convex pattern that is desired is pressed to a transcription material such as a liquid resin on a substrate and whereby a reversal pattern of mold is transcribed to a transcription material.

There are reversal patterns of a fine concave convex pattern in the range of a nanoscale of a 10 nm level to 100 µm. The reversal patterns are used in a wide variety of fields such as a semiconductor material, an optical material, storage media, micro machine, biotechnology, and an environment.

In the case in which a quantity of replica molds are produced from one mold, a quantity of replica molds are formed by a continuous transcription on a roll-to-roll basis while using a resin mold that is flexible and that is provide with following property to a transcription material in some cases. By the above method, a quantity of replica molds can be produced at a low cost as compared with the case in which a reversal pattern of a fine concave convex pattern that is desired is formed by a cutting work of a surface of a metal roll.

Moreover, a production of a large quantity can be carried out in a short time at a moderate price for a resin mold even to a request of a nano order level that is not able to be achieved by a metal roll.

In the case in which a quantity of replica molds are produced by a roll-to-roll while using a resin mold, a quantity of resin molds are arranged and placed on a sheet, and the resin molds on a sheet as one unit are winded around a transcription roll.

That is, in the case in which a quantity of resin molds are arranged and placed on a peripheral surface of a transcription roll, a quantity of replica molds can be formed simultaneously during one rotation of a transcription roll.

As a technique for arranging a quantity of resin molds on a transcription roll, a technique that is described in the Patent Literature 1 is known.

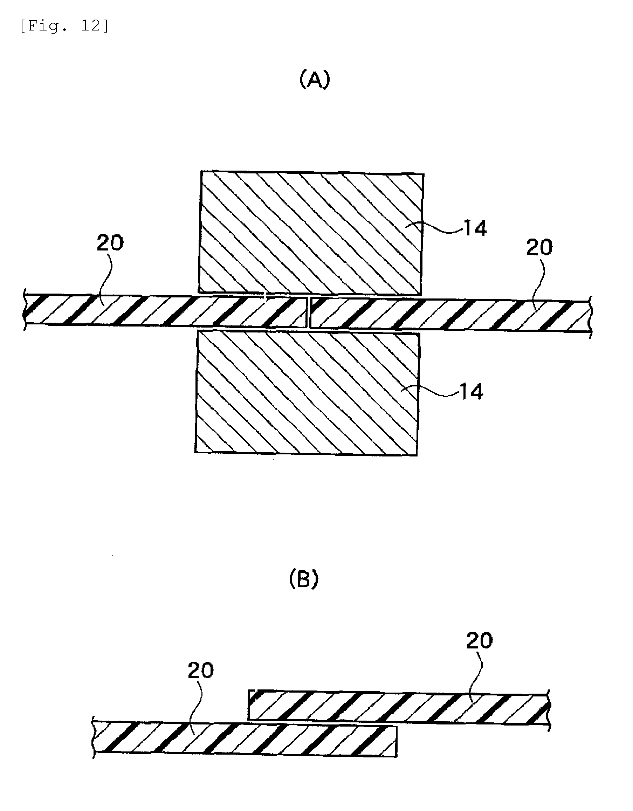

The Patent Literature 1 discloses a technique in which the end parts of resin films 20 and 20 that are butted are placed between a pair of heaters 14 and 14 and are pressurized and fused by the heaters 14 and 14 as shown in Fig. 12 (A) for instance. In addition, the Patent Literature 1 discloses a technique in which resin films 20 and 20 that are to be bonded are arranged in such a manner that the end parts of the resin films 20 and 20 are superimposed and the corresponded parts are pressurized and fused in this state as shown in Fig. 12(B).

### [Prior Art Documents]

### [Patent Literature]

[Patent Literature 1]
WO 2011/049097

### [Summary of Invention]

### [Problems to be Solved by the Invention]

However, in the case in which the end parts of resin films 20 and 20 are butted to each other and are pressurized and fused as shown in Fig. 12(A), the joint parts cannot be bonded to each other to a satisfactory extent and the joint parts are separated from each other later unfortunately.

In an experiment, in the case in which the resin films 20 and 20 that are butted to each other are pressurized and fused as shown in Fig. 12(A), and the resin films 20 and 20 are winded around a transcription roll, whereby a mold for an imprint is produced on a roll-to-roll basis, a peel-off occurs at the joint part between the resin films 20 and 20 after a continuous operation in about four hours.

On the other hand, in the case in which the resin films 20 and 20 that are to be bonded are arranged in such a manner that the end parts of the resin films 20 and 20 are superimposed and the corresponded parts are pressurized and fused in this state as shown in Fig. 12(B), a bonding property of the resin films 20 and 20 can be improved, however, a step is formed at the joint part unfortunately.

In the case in which a step is formed at the joint part as described above, an adverse effect occurs in a transcription of a reversal pattern that is carried out later.

The present invention was made in consideration of such conditions, and an object of the present invention is to provide a bonding method of a resin mold and a roll-to-roll continuous mold composition that is produced by using the bonding method, which are used to manufacture resin structures (in particular, resin-based replica molds) in quantity on a roll-to-roll basis, and with which the strength of a joint part may be increased to a satisfactory extent in the case in which an end part of a resin mold is bonded to each other, almost no step is formed at the joint part, and a transcription of a reversal pattern of a fine concave convex pattern that is desired is carried out in a successful manner.

### [Means for Solving the Problems]

The present invention was made in order to solve the problems of the conventional art described above.

A bonding method of a resin mold in accordance with the present invention is characterized by comprising the step of butting the end parts of resin molds that is provided with a formed reversal pattern of a fine concave convex pattern that is desired to each other for bonding the resin molds, wherein:
a detachable resin is filled in a gap of the butted part between the end parts of the resin molds and the end parts of the resin molds are bonded to each other in an integrated manner by the hardening of the detachable resin.

By using such a bonding method of a resin mold, the strength of a joint for the butted part of the end parts of the resin molds can be increased to a satisfactory extent.

In addition, a detachable resin is filled in a gap of the butted part, whereby a resin of a transcription material can be prevented from entering the gap.

Moreover, the bonding is carried out in a certain manner, whereby the failure in which a joint part is partially detached can be prevented.

In an experiment, in the case in which a replica mold is formed on a roll-to-roll basis by winding around a transcription roll, a continuous operation can be carried out for about eight hours.

The bonding method of a resin mold in accordance with the present invention is characterized in that a gap of the butted part of the resin molds is in the range of 0.5 µm to 3 mm.

By such a gap, the strength of a joint part can be held to a satisfactory extent by the hardening of a detachable resin that is filled in the gap, and a bonding work can be carried out in a successful manner.

In addition, in the case in which such a gap is formed, a step that causes an adverse effect to a transcription can be prevented from being formed at the butted part.

In an experiment, a step can be made to be 30 µm or less, and an adverse effect does not occur to a transcription for the step.

The bonding method of a resin mold in accordance with the present invention is characterized in that the detachable resin is a silicone resin.

In the case in which the detachable resin is a silicone resin as described above, a silicone resin can be obtained easily at a low cost, and the detachability can be displayed to a satisfactory extent for a transcription material in which a reversal pattern of a concave convex pattern is transcribed on a roll-to-roll basis.

A roll-to-roll continuous mold composition that is configured to duplicate a resin structure that is provided with a formed fine concave convex pattern that is desired in large quantity on a roll-to-roll basis in accordance with the present invention is characterized by comprising:
a plurality of resin molds that is provided with a formed reversal pattern of the fine concave convex pattern that is desired; and
a detachable resin that is filled in a gap between the plurality of resin molds that are arranged in a plane fashion,
wherein the plurality of resin molds are formed in an integrated manner by the hardening of the filled detachable resin.

By this configuration, a roll-to-roll continuous mold composition can be enlarged in response to a diameter of a transcription roll that is suitable for a high volume production and can be produced at a low cost. In addition, a continuous operation for a long time can be carried out, whereby a quantity of resin structures can be produced in an efficient way.

In addition, during winding around a transcription roll, it is not necessary to overlap the end parts of the roll-to-roll continuous mold composition, thereby preventing a step from being formed.

The roll-to-roll continuous mold composition in accordance with the present invention is characterized in that the resin structure is a replica mold.

In the case in which the resin structure is a replica mold as described above, a quantity of replica molds can be produced in an efficient way by using the roll-to-roll continuous mold composition in accordance with the present invention.

The roll-to-roll continuous mold composition in accordance with the present invention is characterized in that the resin molds are arranged on a pressure sensitive adhesive double coated tape.

By this configuration, the setup of the roll-to-roll continuous mold composition to a transcription roll can be carried out easily.

The roll-to-roll continuous mold composition in accordance with the present invention is characterized in that a location of an end part of the resin mold and a location of an end part of the pressure sensitive adhesive double coated tape are out of alignment in an elongated direction.

By this configuration, in the case in which the roll-to-roll continuous mold composition is winded around a transcription roll, a step can be prevented from being formed, and the roll-to-roll continuous mold compositions can be bonded to each other in a certain manner.

### [Advantageous Effects of Invention]

The present invention can provide a bonding method of a resin mold and a roll-to-roll continuous mold composition that is produced by using the bonding method, which are used to manufacture resin structures (in particular, resin-based replica molds) in quantity on a roll-to-roll basis, and with which the strength of a joint part may be increased to a satisfactory extent in the case in which an end part of a resin mold is bonded to each other, almost no step is formed at the joint part, and a transcription of a reversal pattern of a fine concave convex pattern that is desired is carried out in a successful manner.

### [Brief Description of the Drawings]

[Fig. 1]

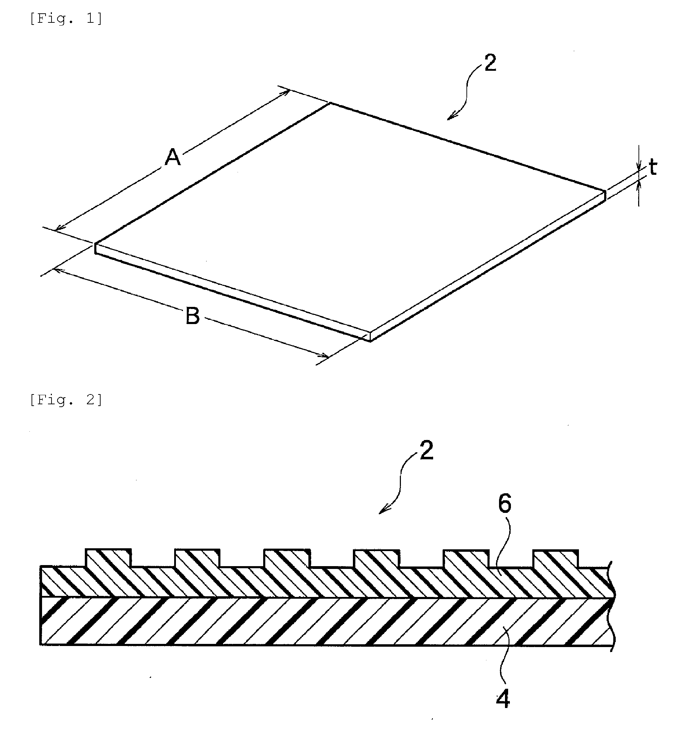

   Fig. 1 is a schematic perspective view showing a resin mold in accordance with an embodiment of the present invention.
[Fig. 2]
   Fig. 2 is an enlarged cross-sectional view showing a resin mold shown in Fig. 1.
[Fig. 3]

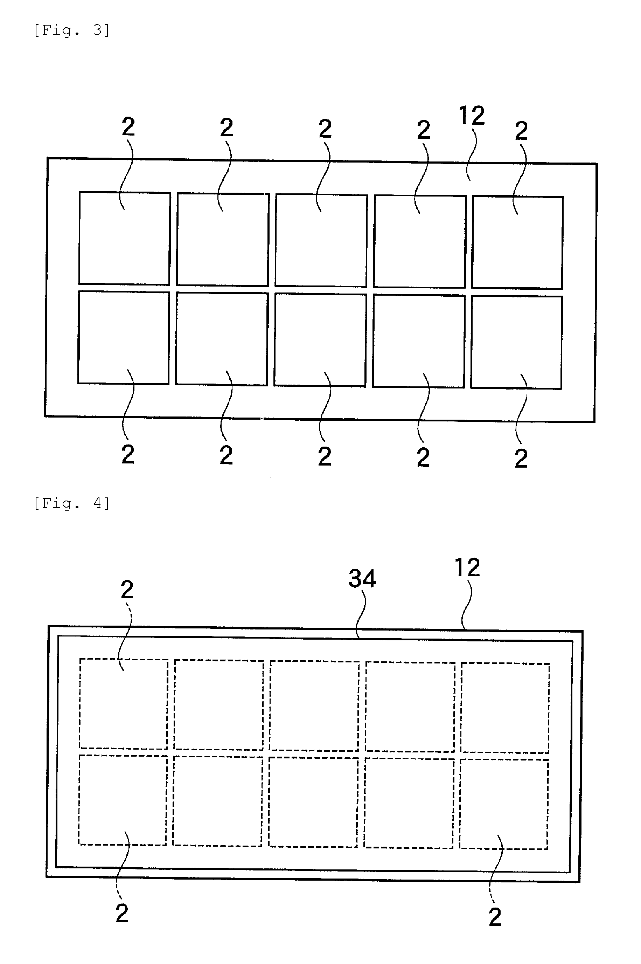

   Fig. 3 is a schematic plain view showing a quantity of resin molds that are arranged and placed on a PET film that is configured as a support body that is configured to form a roll-to-roll continuous mold composition.
[Fig. 4]
   Fig. 4 is a schematic plain view showing resin molds in which a protection tape is attached to a surface from the state of Fig. 3.
[Fig. 5]

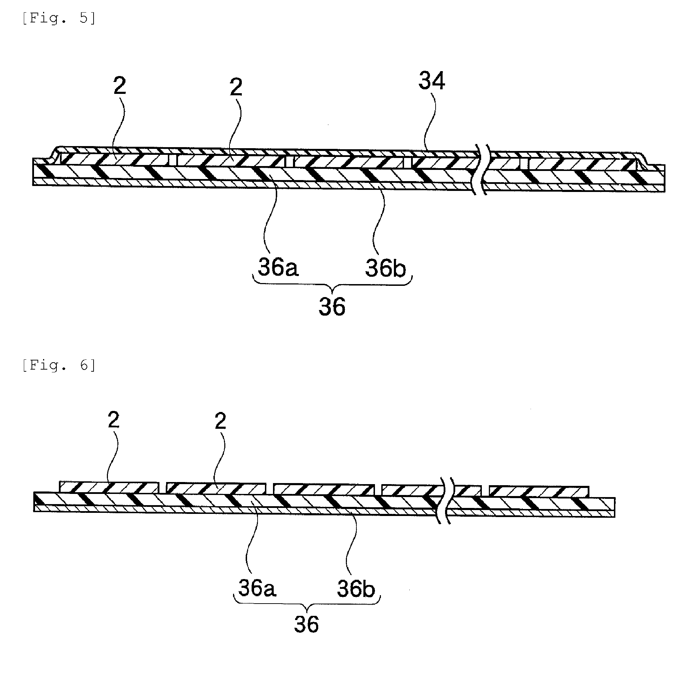

   Fig. 5 is a schematic cross-sectional view showing a resin mold in which the PET film is detached and a pressure sensitive adhesive double coated tape is attached to the place from the state of Fig. 4.
[Fig. 6]
   Fig. 6 is a schematic cross-sectional view showing a resin mold in which the pressure sensitive adhesive double coated tape on the surface side is detached from the state of Fig. 5.
[Fig. 7]

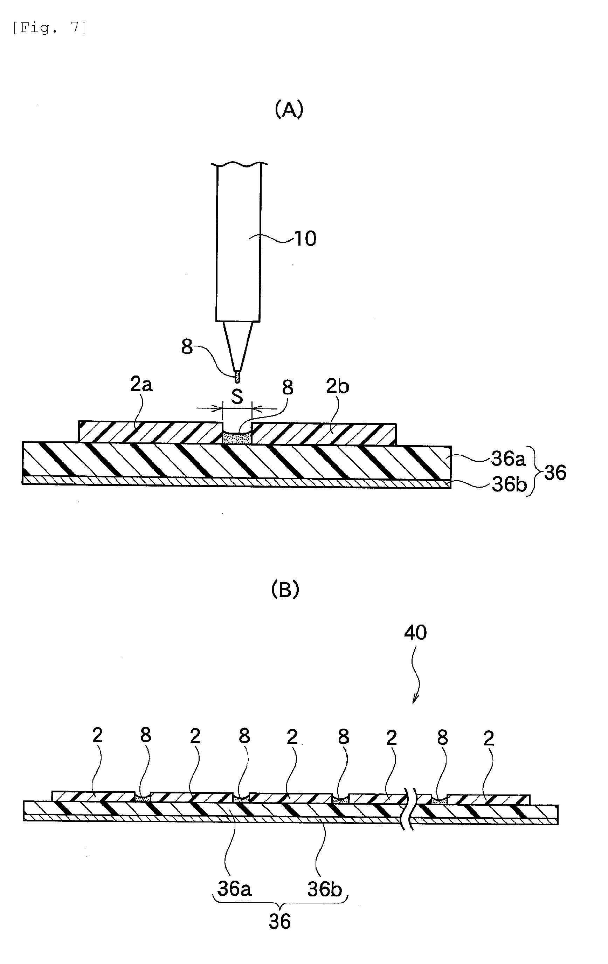

   Fig. 7(A) is a schematic cross-sectional view showing a bonding method of a resin mold in accordance with an embodiment of the present invention. Fig. 7 (B) is a schematic cross-sectional view showing a roll-to-roll continuous mold composition that is bonded by the method of Fig. 7(A).
[Fig. 8]

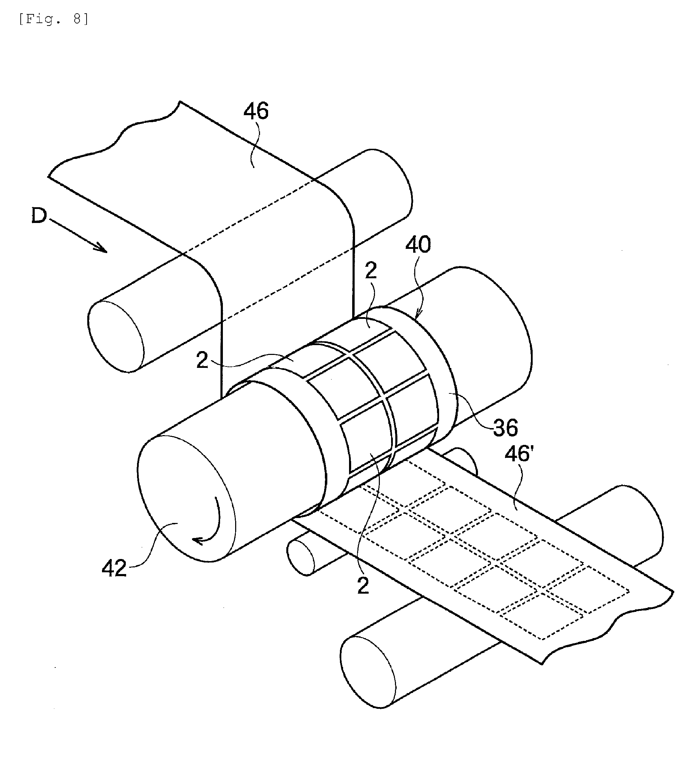

   Fig. 8 is a schematic perspective view showing the case in which a roll-to-roll continuous mold composition that has been produced in an embodiment of the present invention is attached to a transcription roll and a replica mold is duplicated on a roll-to-roll basis.
[Fig. 9]

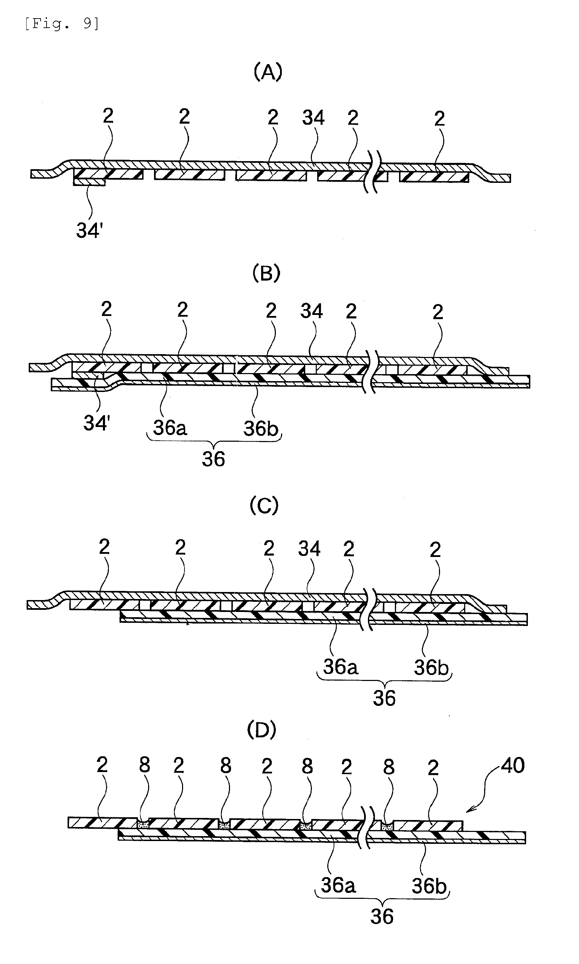

   Fig. 9(A) is a schematic cross-sectional view showing the state in which a protection tape is attached to an upper surface of a resin mold in accordance with another embodiment of the present invention and another protection tape is attached to a lower surface side of a resin mold that is formed at an end part in an elongated direction. Fig. 9(B) is a schematic cross-sectional view showing the state in which a pressure sensitive adhesive double coated tape is attached to a lower surface side from the state of Fig. 9(A). Fig. 9 (C) is a schematic cross-sectional view showing the state in which the protection tape that has been attached to the lower surface side is cut and removed by a cutter together with a pressure sensitive adhesive double coated tape from the state of Fig. 9(B). Fig. 9(D) is a schematic cross-sectional view showing the state in which the protection tape that has been attached to the upper surface side is detached and a photocrosslinkable silicone resin is filled between the resin molds that has been exposed whereby a roll-to-roll continuous mold composition is produced from the state of Fig. 9(C).
[Fig. 10]

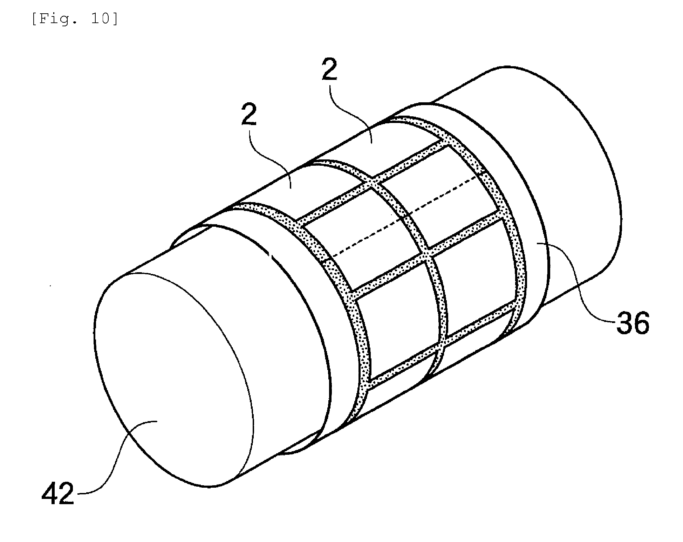

   Fig. 10 is a schematic perspective view showing the case in which the roll-to-roll continuous mold composition that has been produced in Fig. 9(D) is winded around a transcription roll and a gap between resin molds that are corresponded to a butted part is filled with a photocrosslinkable silicone resin.
[Fig. 11]

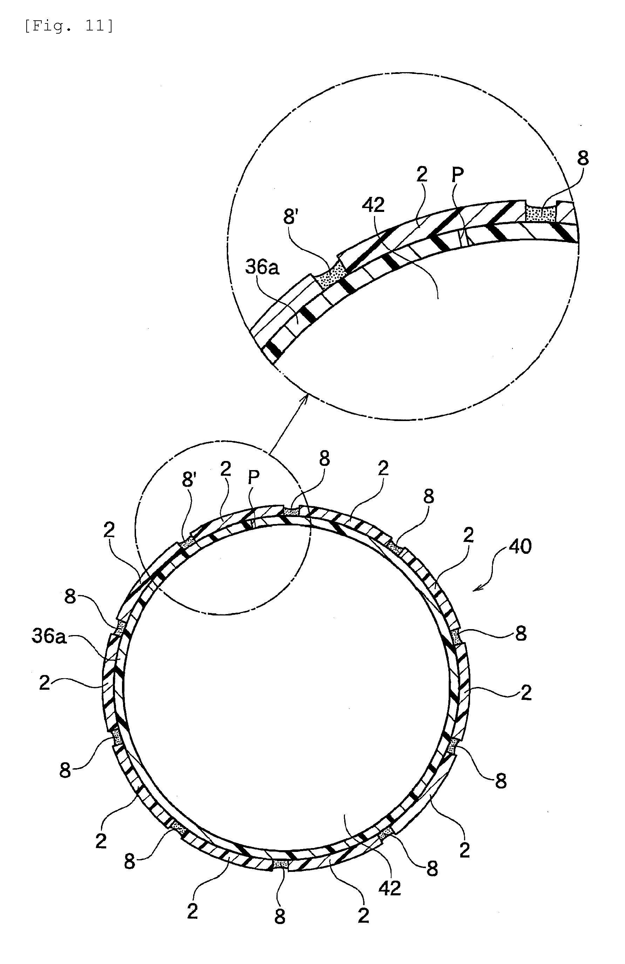

   Fig. 11 is a schematic side cross-sectional view of Fig. 10.
[Fig. 12]
   Fig. 12 (A) and Fig. 12 (B) are a cross-sectional view showing an example that is disclosed in the Patent Literature 1 as an example in which resin films are bonded to each other in order to duplicate a replica mold on a conventional roll-to-roll basis.

### [Description of Embodiments]

A preferred embodiment of the present invention will be described below in detail with reference to the drawings.

In advance of the execution of a bonding method of a resin mold in accordance with the present embodiment, one resin mold 2 or a plurality of resin molds 2 in a generally rectangular shape in which a reversal pattern of a fine concave convex pattern that is desired has been formed are prepared in the first place as shown in Fig. 1.

The resin mold 2 is produced by the imprint technology that is publicly known and is an original version for producing a quantity of resin structures (in particular, resin-based replica molds) later.

The resin mold 2 is provided with a resin layer 6 that is provided with a reversal pattern of a fine concave convex pattern that is desired on a flexible substrate 4 as shown by an enlarged view of Fig. 2.

As the substrate 4, one kind that is selected from a resin substrate, a glass substrate, a silicon substrate, a sapphire substrate, a carbon substrate, and a GaN substrate can be mentioned for instance.

Among them, the resin substrate is preferable for producing the resin mold 2 that is provided with flexibility, and is made of one kind that is selected from a group that is composed of polyethylene terephthalate, polycarbonate, polyester, polyolefin, polyimide, polysulfone, polyether sulfone, cyclic polyolefin, and polyethylene naphthalate for instance.

As a resin for producing the resin layer 6, a thermoplastic resin, a thermosetting resin, and a photocrosslinkable resin can be mentioned for instance.

As a thermoplastic resin, an acrylic series resin, a styrene series resin, an olefin series resin, a polycarbonate series resin, and a polyester series resin can be mentioned preferably for instance.

As a thermosetting resin or a photocrosslinkable resin, an epoxy resin can be mentioned preferably for instance. More preferably, polymethacrylic acid methyl, a cycloolefin resin, a styrene resin, an epoxy resin, polycarbonate, and polyethylene terephthalate can be mentioned for instance.

For the resin layer 6, an additive agent that is provided with a substituent group that can be bonded with a mold release agent, a substituent group that is provided with a compatibility with the above resin, and a bleed property to a resin can be used.

As an additive agent, a compound that is represented by the following general formula (1) or a hydrolysate thereof can be mentioned for instance.

Y₃-n(CH₃)nSiAX (1)

(In the formula (1), Y is a methoxy group or an ethoxy group, A is a single bond, an ethylene group, or a propyl group, X is one king that is selected from a group that is composed of an epoxy group, a glycidoxy group, and a phenyl group and amino group that can be provided with a substituent group, and n is 0 or 1.)

Here, it is thought that Y or a hydrolyzed group thereof is a group that can be bonded with a mold release agent described above, and X is a group that is provided with a compatibility with a solvent soluble resin described above.

As a resin that forms the resin layer 6, it is preferable that the resin is an above described thermoplastic resin that is provided with a constitutional unit that is provided with a substituent group of a kind that is equivalent to X from the aspect of a compatibility with an additive agent. The constitutional unit that is provided with a substituent group of a kind that is equivalent to X is included preferably in the range of 1 to 15% by weight, more preferably in the range of 2 to 10% by weight in all constitutional units of the resin.

In the above range, a resin and an additive agent can be prevented from being separated. However, it is thought that a bleed out to a surface of a resin layer of an additive agent may be occurs.

In the case in which a sum total of a resin and an additive agent is 100 weight part, an additive agent is added at a rate in the range of 1 to 13 weight part, preferably 2 to 9 weight part.

A thickness of the above described resin layer 6 is in the range of 50 nm to 1 mm by ordinary, in the range of 500 nm to 500 µm preferably. In the case in which a thickness of the resin layer 6 is in the above described range, the imprint processing can be easily carried out.

While a surface shape (a reversal pattern of a concave convex pattern) of the resin layer 6 is not restricted in particular, it is preferable that a cycle length is in the range of 10 nm to 2 mm, a depth is in the range of 10 nm to 500 µm, and a transcription surface is in the range of 1.0 to 1.0 × 106 mm². It is more preferable that a cycle length is in the range of 20 nm to 20 µm, a depth is in the range of 50 nm to 1 µm, and a transcription surface is in the range of 1.0 to 0.25 × 106 mm².

By the above described configuration, a reversal pattern of a concave convex pattern that is sufficient to a transcription body can be transcribed. As a surface shape, a moth-eye, a line, a circular cylinder, a monolith, a circular cone, a polygonal cone, and a microlens can be mentioned for instance.

It is possible that a detachment processing for preventing an adhesion to a transcription body is carried out for the surface of the resin layer 6. In addition, it is possible that a detachment processing is for forming a detachment layer (not shown).

It is preferable that a mold release agent that forms a detachment layer (not shown) is made of at least one kind that is selected from a group that is composed of a fluorine series silane coupling agent, a perfluoro compound that is provided with an amino group or a carboxyl group, a perfluoro ether compound that is provided with an amino group or a carboxyl group. It is more preferable that the mold release agent that forms the detachment layer is made of at least one kind that is selected from a group that is composed of a fluorine series silane coupling agent, a simple substance of a mono-terminal amine perfluoro (perfluoro ether) compound and a mono-terminal carboxylation perfluoro (perfluoro ether) compound, and a mixture of a simple substance and a complex.

In the case in which the above described substance is used as a mold release agent, the cohesion to the resin layer 6 is carried out in a successful manner, and the detachability with a resin that carries out an imprint can be displayed to a satisfactory extent.

A thickness of a detachment layer (not shown) is preferably in the range of 0.5 to 20 nm, more preferably in the range of 0.5 to 10 nm, most preferably in the range of 0.5 to 5 nm.

It is thought that a detachment layer (not shown) is bonded to the resin layer 6 by the chemical bonding of a mold release agent and a group that can be bonded to a mold release agent of an additive agent that is eccentrically located around the surface of the resin layer 6. It is thought that the chemical bonding is a condensation.

In the case in which the above described additive agent is represented by the general formula (1), it is thought that the substituent group Y or a hydrolyzed group thereof is chemically bonded to a substituent group of a mold release agent (including a group in which a hydrolytic degradation occurs) . It is thought that the chemical bonding is a condensation.

For a resin mold 2 that is formed by the above described material in accordance with the present embodiment, a vertical length A × a horizontal length B is 80 mm × 80 mm and a thickness t is 130 µm for instance.

In the case in which a replica mold is formed in a continuous manner on a roll-to-roll basis, a replica mold can be duplicated in an extremely efficient way as compared with the case in which a resin mold is pressed to a transcription material by a stamp system that has been carried out in the past.

As a diameter of a transcription roll to which a replica mold is applied is larger, the production efficiency becomes higher.

In that case, it is preferable that not one resin mold 2 but a quantity of resin molds 2 are used. In addition, it is preferable that the resin molds 2 are arranged in the form of plates and then winded around the transcription roll 42.

That is, in the case in which a quantity of resin molds 2 are arranged on a peripheral surface of the transcription roll 42, a quantity of replica molds can be formed in a continuous manner by a rotation of the transcription roll 42.

In the present embodiment, a roll-to-roll continuous mold composition 40 that is winded around the transcription roll 42 is produced.

More specifically in the present embodiment, in the first place, twenty resin molds 2 that is provided with a formed reversal pattern of a fine concave convex pattern are arranged in a double line on the PET film 12 so as to be adjacent to each other for instance as shown in Fig. 3.

In the next place as shown in Fig. 4, a protection tape 34 is attached so as to cover the surface in which a reversal pattern of a fine concave convex pattern that is desired has been formed for the resin molds 2 that has been arranged so as to be adjacent to each other.

In the case in which the protection tape 34 is attached to a surface side on which a reversal pattern of a fine concave convex pattern of the resin mold 2 has been formed, as shown in Fig. 5 moreover, the PET film 12 that has been used as a support film on a rear face side is detached, and a strong adhesion side of a pressure sensitive adhesive double coated tape 36 that is provided with different physical property on both sides (strong adhesion property / re-detachability) is attached to the place, that is, a rear face side of the resin molds 2.

The pressure sensitive adhesive double coated tape 36 is provided with a base material 36a made of a PET resin and a mold release film 36b on at least one surface.

As described above, the pressure sensitive adhesive double coated tape 36 of which one side is covered by the mold release film 36b is attached to a rear face side of the resin mold 2. At this time, it is preferable that an end part of the resin mold 2 and an end part of the pressure sensitive adhesive double coated tape 36 are arranged out of alignment in an elongated direction since a step at a joint part can be prevented from being generated or can be less in the case in which the resin mold 2 is winded around the transcription roll 42.

As another mode, an adhesive agent layer that is provided with different physical property on both sides (strong adhesion property / re-detachability) can also be formed on the both sides of the PET film 12. An adhesive agent layer that is provided with a strong adhesion property is attached to a rear face side of the resin molds 2. In this case, the pressure sensitive adhesive double coated tape 36 can be omitted.

In this case, it is preferable that an end part of the resin mold 2 and an end part of the PET film 12 are arranged out of alignment in an elongated direction since a step at a joint part can be prevented from being generated or can be less in the case in which the resin mold 2 is winded around the transcription roll 42.

In the next process as shown in Fig. 6, the protection tape 34 on the surface side is detached. In the present embodiment, a detachable resin 8 is filled by a micropipette 10 into a gap between the resin molds 2 and 2 that has been exposed by the detachment of the protection tape 34 as shown by an enlarged view of Fig. 7.

A separate distance S of a resin mold 2a and the other resin mold 2b that is adjacent to the resin mold 2a is in the range of 0.5 µm to 3 mm, preferably in the range of 1 µm to 2.5 mm, more preferably in the range of 2 µm to 2 mm.

As the detachable resin 8, a silicone resin, a fluorine resin, an alkyd resin, a long-chain alkyl compound, and a wax can be used for instance. Among them, a silicone resin is preferable.

A silicone resin can be easily obtained at a low cost. In addition, the detachability can be displayed to a satisfactory extent for a transcription material in which a reversal pattern of a concave convex pattern is transcribed on a roll-to-roll basis.

By filling the detachable resin 8 into a gap, the detachable resin 8 can be hardened in the course of nature in accordance with a passage of time or in a positive manner by an irradiation of an ultraviolet light. Since a gap is consolidated by the detachable resin 8 at a joint part of the resin molds 2 and 2 that have been formed in an integrated manner by using the detachable resin 8, other resins is prevented from entering the part.

It is preferable that a thickness of the detachable resin 8 at the time of filling is closer to a thickness of the substrate 4 that configures the resin mold 2 shown in Fig. 2. However, it is not preferable that a thickness of the detachable resin 8 exceeds ±30 µm of a thickness of the substrate 4 since a transcription material causes an increased potential of being deposited.

The detachable resin 8 is then hardened by carrying out a UV irradiation or the like.

By the above process, the roll-to-roll continuous mold composition 40 is formed as shown in Fig. 7(B). After the detachable resin 8 is hardened fully and completely, the mold release film 36b on a rear face side of the pressure sensitive adhesive double coated tape 36 shown in Fig. 7(B) is detached.

In the present embodiment, the roll-to-roll continuous mold composition 40 that has been formed as described above is winded in a loop shape around the surface of the transcription roll 42 as shown in Fig. 8.

In the case in which a gap is generated at a connection part of one end and the other end of the roll-to-roll continuous mold composition 40 that has been winded, it is preferable that the detachable resin 8 is filled in the gap.

In the case in which the roll-to-roll continuous mold composition 40 is attached to a peripheral surface of the transcription roll 42 in an integrated manner as described above, by rotating the transcription roll 42 in a clockwise fashion to the transcription material 46 that is conveyed from a left hand to a right hand of the figure as shown by an arrow D in Fig. 8, a reversal pattern of a fine concave convex pattern of a quantity of (twenty in the present embodiment) resin molds 2 is transcribed to the transcription material 46' on a downstream side in a continuous manner, whereby a resin structure that is provided with a formed fine concave convex pattern that is desired can be obtained.

It is preferable that the resin structure that has been obtained is used as a replica mold. However, the resin structure can also be used as a reflection prevention film.

In the present embodiment as described above, the imprint can be carried out in a continuous manner using the resin mold 2 on a roll-to-roll basis. In addition, in an experiment, it was confirmed that a continuous operation for eight hours can be carried out without any difficulty in the case in which a continuous running is carried out.

While the preferred embodiment in accordance with the present invention has been described above, the present invention is not restricted to the embodiment described above.

The twenty resin molds 2 are winded around the transcription roll 42 in the above described embodiment for instance. However, in the case in which one large size resin mold is formed as an original version for instance, the one large size resin mold is winded in a loop shape around the transcription roll 42, and the both end parts of the resin mold can be bonded to each other while the detachable resin 8 is disposed at the joint part.

The embodiment that has been carried out as a practical matter will be described in the following.

### [Embodiments]

### [Embodiment 1]

### <Fabrication of the roll-to-roll continuous mold composition 40>

As a resin mold 2, a composition that is equivalent to that of the embodiment 1 that is described in the international application number PCT/JP2011/067769 was prepared (the substrate 4: a polyethylene terephthalate film that is provided with a thickness of 125 µm, the resin layer 6: a mixture including methyl methacrylate, glycidyl methacrylate, and 3-glycidoxypropyltrimethoxysilane, the detachment layer: perfluoropolyether series).

The twenty resin molds 2 were produced by cutting into 80 mm square in an accurate fashion by using a template.

The resin molds 2 in which a surface in which a reversal pattern of the fine concave convex pattern was formed faces an upward direction were arranged on the PET film 12 that was prepared separately in such a manner that a space between the resin molds 2 is approximately 1 mm.

After the protection tape 34 was attached to a surface in which a reversal pattern of the fine concave convex pattern was formed, the resin molds 2 were reversed, the PET film 12 was detached, and a strong adhesive agent side of a pressure sensitive adhesive double coated tape 36 that is provided with different physical property on both sides (strong adhesion property / re-detachability) was attached to the rear face side of the resin molds 2 by using a laminating machine.

In the next place, the protection tape 34 was detached, a photocrosslinkable silicone resin that is provided with the detachability (the detachable resin 8) was rubbed into a gap between the resin molds 2 and hardened by a UV light, whereby the roll-to-roll continuous mold composition 40 in an elongated shape was produced.

While the mold release film 36b that was laminated on a re-detachable adhesive agent side of the pressure sensitive adhesive double coated tape 36 was detached, the roll-to-roll continuous mold composition 40 was attached to a SUS roll (the transcription roll 42) of ϕ250 mm.

A connection part of one end and the other end of the roll-to-roll continuous mold composition 40 was filled by a photocrosslinkable silicone resin (the detachable resin 8) similarly to the above.

### <Result of the roll-to-roll continuous transcription>

A transcription resin (PAK-02, manufactured by Toyo Gosei Co. Ltd) was rubbed on a transcription base material of a PET material by using a die coater (a film thickness is 125 µm), whereby a transcription material 46 was produced.

In the next place, after the transcription roll 42 around which the roll-to-roll continuous mold composition 40 was winded was rotated at a feed speed of 1 m/min, the resin mold 2 was pressed to the transcription material 46 and was hardened by a UV light, and a mold release was carried out. The above processes were carried out in a repetitive manner.

As a result, a transcription resin did not enter and was not deposited in a gap of the butted part of the resin mold 2, and a defect of the resin layer 6 of the resin mold 2 did not occur, and a continuous transcription for eight hours or more was enabled.

As a transcription area, 97% of a reversal pattern area of the resin mold 2 was ensured. For a shape, in the case in which the resin mold 2 and a transcription product were observed by using an electron microscope, it was confirmed that a surface was not contaminated and a shape was not damaged or deformed for the resin mold 2 even after a continuous transcription for eight hours and a transcription product was provided with the almost same shape at a commencement and a termination of the transcription.

### [Embodiment 2]

### <Fabrication of the roll-to-roll continuous mold composition 40>

Similarly to the embodiment 1, the twenty resin molds 2 were produced by cutting into 80 mm square in an accurate fashion by using a template. The produced resin molds 2 in which a surface in which a reversal pattern of the fine concave convex pattern that was desired was formed faces an upward direction were arranged on the PET film 12 that was prepared separately in such a manner that a space between the resin molds 2 is approximately 1 mm.

After the protection tape 34 was attached to a surface in which a reversal pattern of the fine concave convex pattern that was desired was formed, the resin molds 2 were reversed, the PET film 12 was detached, and the protection tape 34' of a 5 mm width was attached to one end part in an elongated direction of the resin molds 2 that were arranged as shown schematically in Fig. 9(A).

After that, as shown in Fig. 9(B), a strong adhesive agent side of a pressure sensitive adhesive double coated tape 36 that is provided with different physical property on both sides (strong adhesion property / re-detachability) was attached to the rear face side of the resin molds 2 by using a laminating machine.

After that, as shown in Fig. 9(C), the protection tape 34' and a part of the pressure sensitive adhesive double coated tape 36 that was laminated on the protection tape 34' were removed by using a cutter.

By this process, the end part of the resin mold 2 and the end part of the pressure sensitive adhesive double coated tape 36 could be arranged out of alignment in an elongated direction.

In the next place, as shown in Fig. 9(D), the protection tape 34 was detached, a photocrosslinkable silicone resin that is provided with the detachability was rubbed into a gap between the resin molds 2 and hardened by a UV light, whereby the roll-to-roll continuous mold composition 40 in an elongated shape was produced.

After that, while the mold release film 36b that was laminated on a re-detachable adhesive agent side of the pressure sensitive adhesive double coated tape 36 was detached, the roll-to-roll continuous mold composition 40 was attached to the transcription roll 42 made of SUS of ϕ250 mm (see Fig. 10).

At a connection part of one end and the other end of the roll-to-roll continuous mold composition 40, a connection part P of the pressure sensitive adhesive double coated tape 36 and a connection part of the resin mold 2 were located out of alignment. Only a connection part of the resin mold 2 was filled by the detachable resin 8' made of a photocrosslinkable silicone resin similarly to the above (see Fig. 11).

### <Result of the roll-to-roll continuous transcription>

After the transcription roll 42 around which the roll-to-roll continuous mold composition 40 was winded was rotated at a feed speed of 1 m/min, the resin mold 2 was pressed to the transcription material 46 that is equivalent to that of the embodiment 1 and was hardened by a UV light, and a mold release was carried out. The above processes were carried out in a repetitive manner.

As a result, a transcription resin did not enter and was not deposited in a gap of the butted part of the resin mold 2, and a defect of the resin layer 6 of the resin mold 2 did not occur, and a continuous transcription for eight hours or more was enabled.

As a transcription area, 97% of a reversal pattern area of the resin mold 2 was ensured.

For a shape, in the case in which the resin mold 2 and a transcription product were observed by using an electron microscope, it was confirmed that a surface was not contaminated and a shape was not damaged or deformed for the resin mold 2 even after a continuous transcription for eight hours and a transcription product was provided with the almost same shape at a commencement and a termination of the transcription.

### [Reference Signs List]

2: Resin mold
2a: Resin mold
2b: Resin mold
4: Substrate
6: Resin layer
8: Detachable resin
8': Detachable resin
10: Micropipette
12: PET film
14: Heater
20: Resin film
34: Protection tape
34': Protection tape
36: Pressure sensitive adhesive double coated tape
36a: Base material
36b: Mold release film
40: Roll-to-roll continuous mold composition
42: Transcription roll
46: Transcription material
46': Transcription material
P: Connection part
S: Separate distance

## Claims

1. A bonding method of a resin mold, comprising the step of butting the end parts of resin molds that is provided with a formed reversal pattern of a fine concave convex pattern that is desired to each other for bonding the resin molds, wherein:
a detachable resin is filled in a gap of the butted part between the end parts of the resin molds and the end parts of the resin molds are bonded to each other in an integrated manner by the hardening of the detachable resin.

2. The bonding method of a resin mold as defined in claim 1, wherein a gap of the butted part of the resin molds is in the range of 0.5 µm to 3 mm.

3. The bonding method of a resin mold as defined in claim 1, wherein the detachable resin is a silicone resin.

4. A roll-to-roll continuous mold composition that is configured to duplicate a resin structure that is provided with a formed fine concave convex pattern that is desired in large quantity on a roll-to-roll basis, comprising:
a plurality of resin molds that is provided with a formed reversal pattern of the fine concave convex pattern that is desired; and
a detachable resin that is filled in a gap between the plurality of resin molds that are arranged in a plane fashion,
wherein the plurality of resin molds are formed in an integrated manner by the hardening of the filled detachable resin.

5. The roll-to-roll continuous mold composition as defined in claim 4, wherein the resin structure is a replica mold.

6. The roll-to-roll continuous mold composition as defined in claim 5, wherein the resin molds are arranged on a pressure sensitive adhesive double coated tape.

7. The roll-to-roll continuous mold composition as defined in claim 6, wherein a location of an end part of the resin mold and a location of an end part of the pressure sensitive adhesive double coated tape are out of alignment in an elongated direction.
